(19) Europäisches Patentamt / European Patent Office / Office européen des brevets

(11) **EP 4 148 818 A1**

(12) **EUROPEAN PATENT APPLICATION**
published in accordance with Art. 153(4) EPC

(43) Date of publication:
**15.03.2023 Bulletin 2023/11**

(51) International Patent Classification (IPC):
$H01M\ 4/13^{(2010.01)}$    $H01M\ 10/0525^{(2010.01)}$
$H01M\ 10/42^{(2006.01)}$    $H01M\ 4/139^{(2010.01)}$

(21) Application number: **21902278.7**

(52) Cooperative Patent Classification (CPC):
Y02E 60/10

(22) Date of filing: **04.11.2021**

(86) International application number:
**PCT/CN2021/128652**

(87) International publication number:
**WO 2022/121571 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.12.2020 CN 202011433363**

(71) Applicant: **Jiangsu Contemporary Amperex Technology Limited**
**Liyang, Jiangsu 213300 (CN)**

(72) Inventors:
• **TIAN, Jiarui**
**hangzhou, Jiangsu 213300 (CN)**
• **GUO, Yongsheng**
**hangzhou, Jiangsu 213300 (CN)**

• **OUYANG, Chuying**
**hangzhou, Jiangsu 213300 (CN)**
• **ZHANG, Xinxin**
**hangzhou, Jiangsu 213300 (CN)**
• **HUANG, Liting**
**hangzhou, Jiangsu 213300 (CN)**
• **SU, Shuojian**
**hangzhou, Jiangsu 213300 (CN)**
• **LIN, Wenguang**
**hangzhou, Jiangsu 213300 (CN)**
• **CHEN, Xiaoxia**
**hangzhou, Jiangsu 213300 (CN)**

(74) Representative: **Rowlands, Stuart Michael et al**
**Maucher Jenkins**
**Seventh Floor Offices**
**Artillery House**
**11-19 Artillery Row**
**London SW1P 1RT (GB)**

(54) **ELECTRODE POLE PIECE, SECONDARY BATTERY AND PREPARATION METHOD THEREFOR, AND DEVICE COMPRISING SECONDARY BATTERY**

(57) Disclosed in the present application are an electrode pole piece, a secondary battery and a preparation method therefor, and a device comprising the secondary battery. The electrode pole piece comprises a current collector and an active material layer provided on at least one surface of the current collector, wherein the active material layer comprises an active material and a solid water-fixing agent capable of fixing moisture.

Fig. 1

**Description**

Cross-Reference to Related Applications

The present application claims the priority of Chinese patent application no. 202011433363.6, entitled "electrode plate, secondary battery and preparation method therefor and device comprising secondary battery", filed on December 09, 2020, the entire content of which is incorporated herein by reference.

Technical Field

The present application relates to the technical field of energy storage devices, in particular relates to an electrode plate, a secondary battery and a preparation method therefor and a device comprising the secondary battery.

Background Art

Secondary batteries have advantages of high specific energy, long service life, low cost and the like, and thus are widely used. For example, with the accelerated promotion and application of electric vehicles, energy storage power stations, etc., in new energy industries, the demand for secondary batteries will increase.

At present, due to the widespread use of lithium ion batteries, the demand for lithium resources is continuously growing, which will lead to a strategic shortage of lithium resources in the long run. In this context, people have begun to seek new secondary batteries which need to meet the requirements of abundant upstream raw material reserves and easy availability, to replace lithium ion batteries. As a result, new secondary batteries represented by sodium ion batteries have gradually attracted people's attention. The working principles of these secondary batteries are similar to those of lithium ion batteries, in that they all rely on back and forth movement of active ions between a positive electrode plate and a negative electrode plate to implement charging and discharging.

However, there are still many problems to be solved on the way to industrialization of new secondary batteries such as sodium ion batteries. In particular, how to provide a new type of secondary battery with long cycling life is one of the core issues.

Summary of the Invention

The present application provides an electrode plate, a secondary battery and a preparation method therefor, and a device comprising the secondary battery, which can improve the utilization of the capacity of the secondary battery such that the secondary battery has both high initial specific discharge capacity and high initial charge/discharge efficiency.

A first aspect of the present application provides an electrode plate comprising a current collector and an active material layer provided on at least one surface of the current collector, wherein the active material layer comprises an active material and a solid water-fixing agent capable of fixing water.

A solid water-fixing agent is added into the active material layer of the electrode plate of the present application, and the solid water-fixing agent can fix water, which makes it possible to remove water during the formation stage and/or the charge/discharge cycling stage (e.g. the initial cycling stage) of a battery, and thus the free water content in a secondary battery is significantly reduced and the cycling performance of the secondary battery can be improved consequently.

In any embodiment of the present application, the water-fixing agent can fix water by means of physical absorption and/or chemical bonding. Under the normal working conditions of the secondary battery, very little or none of the water fixed by the water-fixing agent will be redistributed to the active material phase and/or the electrolyte solution phase, which can greatly improve the cycling performance of the battery.

In any embodiment of the present application, the water-fixing agent can fix water in a crystal structure. The water-fixing agent can absorb water quickly, remove free water in a timely manner and can fix water efficiently, and thus the cycling performance of a battery can be improved.

In any embodiment of the present application, after heat treatment at 80°C for 30 min, the water-fixing agent with water fixed has a water content $W_H \leq 5\% \times$ the water absorption at saturation of the water-fixing agent. Optionally, $W_H \leq 1\% \times$ the water absorption at saturation of the water-fixing agent. The water-fixing agent meets the above-mentioned conditions, and the water contained therein can be removed during drying in the preparation process of electrode plates, thus ensuring that the water-fixing agent can play a role of fixing water during the formation stage and/or the charge/discharge cycling stage of a battery.

In any embodiment of the present application, after heat treatment at 150°C for 30 min, the electrode plate has a weight loss rate $R_{WL} \leq 15\%$. Optionally, $R_{WL}$ is 1%-10%. Further optionally, $R_{WL}$ is 2% - 6%. For the case where the electrode plate meets the above-mentioned conditions, the water-fixing agent substantially will not decompose at the temperature for drying the coating layer, thus ensuring that the water-fixing agent can play a role of fixing water during the formation stage and/or the charge/discharge cycling stage of a battery.

In any embodiment of the present application, the water-fixing agent has a water absorption at saturation $R_{SA}$ $\geq$ 40%; optionally, $R_{SA} \geq$ 80%; further optionally, $R_{SA} \geq$ 100%. The water-fixing agent has a large water absorption capacity, which can reduce the content of the water-fixing agent in the active material layer, thus increasing the energy density of a battery while improving the cycling performance of the battery.

In any embodiment of the present application, the water-fixing agent is a powder with a volume average particle size $D_v50$ of 10 nm - 100 $\mu$m. Optionally, the water-fixing agent has a $D_v50$ of 50 nm - 10 $\mu$m. As the $D_v50$ of the water-fixing agent powder is in an appropriate range, it can further improve the cycling performance of the battery; at the same time, it is also beneficial for the battery to obtain high safety performance.

In any embodiment of the present application, the water-fixing agent includes an inorganic water removal material, optionally including one or more of anhydrous sodium sulfate, anhydrous calcium sulfate, anhydrous calcium chloride, anhydrous magnesium sulfate, anhydrous magnesium perchlorate, anhydrous aluminum trichloride, activated alumina and silica gel, further optionally including one or more of anhydrous sodium sulfate and anhydrous magnesium sulfate. The use of a suitable water-fixing agent can better improve the cycling performance of a battery and can also further improve the initial specific discharge capacity and the initial charge/discharge efficiency.

In any embodiment of the present application, the mass percentage of the water-fixing agent in the active material layer is 0.1%-10%, optionally 0.5%-5%. As the mass percentage of the water-fixing agent in the active material layer is within the above-mentioned range, it can not only effectively improve the cycling performance of a battery, but also help the battery to obtain a high energy density.

In any embodiment of the present application, the electrode plate is a positive electrode plate, and the positive electrode plate comprises a positive electrode current collector and a positive electrode active material layer provided on at least one surface of the positive electrode current collector, wherein the positive electrode active material layer comprises a positive electrode active material and a water-fixing agent.

In any embodiment of the present application, the mass percentage of the water-fixing agent in the positive electrode active material layer is 1%-5%. The water-fixing agent is added into the positive electrode active material layer such that the mass percentage of the water-fixing agent in the positive electrode active material layer is within the above-mentioned range, which can not only effectively improve the cycling performance of a battery, but also help the battery to obtain a high energy density.

In any embodiment of the present application, the positive electrode active material includes a transition metal cyanide, optionally including one or more of $Na_2MnFe(CN)_4$, $Na_2FeFe(CN)_4$, $Na_2NiFe(CN)_4$, and $Na_2CuFe(CN)_4$.

In any embodiment of the present application, the electrode plate is a negative electrode plate, and the negative electrode plate comprises a negative electrode current collector and a negative electrode active material layer provided on at least one surface of the negative electrode current collector, wherein the negative electrode active material layer comprises a negative electrode active material and a water-fixing agent.

In any embodiment of the present application, the mass percentage of the water-fixing agent in the negative electrode active material layer is 0.5%-3%. The water-fixing agent is added into the negative electrode active material layer such that the mass percentage of the water-fixing agent in the negative electrode active material layer is within the above-mentioned range, which can not only effectively improve the cycling performance of a battery, but also help the battery to obtain a high energy density.

In any embodiment of the present application, the negative electrode active material includes one or more of sodium metal, soft carbon, hard carbon, synthetic graphite, natural graphite, silicon, silicon oxides, silicon nitrides, silicon carbon composites, transition metal cyanides, metals that can form alloys with sodium, polyanionic compounds, and sodium-containing transition metal oxides.

A second aspect of the present application provides a secondary battery comprising a positive electrode plate and a negative electrode plate, wherein the positive electrode plate and/or the negative electrode plate is the electrode plate provided by the present application.

By using the electrode plate of the present application, the secondary battery of the present application can obtain high cycling performance, as well as high initial specific discharge capacity and initial charge/discharge efficiency.

A third aspect of the present application provides a method for preparing a secondary battery, including preparing the electrode plate of the secondary battery by the following steps: providing a slurry comprising an active material and a water-fixing agent; coating the slurry on at least one surface of the current collector, and drying and cold pressing same to obtain the electrode plate; wherein the water-fixing agent in the electrode plate is in a solid state and the water-fixing agent can fix water.

In the secondary battery obtained by the preparation method provided by the present application, the active material layer of the electrode plate is added with a solid water-fixing agent capable of fixing water, which makes it possible to remove water during the formation stage and/or the charge/discharge cycling stage (e.g. the initial cycling stage) of the battery, and thus the cycling performance of the secondary battery can be improved. In addition, the secondary battery can also have both high initial specific discharge capacity and initial charge/discharge efficiency.

A fourth aspect of the present application provides a device comprising the secondary battery of the second aspect of the present application, and/or the secondary battery obtained according to the preparation method of the third aspect of the present application.

The device of the present application comprises the secondary battery provided by the present application, and thus has at least the same or similar advantages as the secondary battery.

Brief Description of the Drawings

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without the inventive labour.

Fig. 1 is a schematic diagram of an embodiment of the electrode plate of the present application.
Fig. 2 is a schematic diagram of another embodiment of the electrode plate of the present application.
Fig. 3 is a schematic diagram of an embodiment of the secondary battery of the present application.
Fig. 4 is an exploded diagram of Fig. 3.
Fig. 5 is a schematic diagram of an embodiment of the battery module of the present application.
Fig. 6 is a schematic diagram of an embodiment of the battery pack of the present application.
Fig. 7 is an exploded diagram of Fig. 6.
Fig. 8 is a schematic diagram of an embodiment of a device using a secondary battery of the present application as a power supply.

Detailed Description of Embodiments

In order to make the objectives, technical solutions and beneficial technical effects of the present application clearer, the present application will be further described in detail below in conjunction with embodiments. It is to be understood that the embodiments described in this specification are merely for explaining, instead of, limiting the present application.

For the sake of brevity, merely some numerical ranges are explicitly disclosed herein. However, any lower limit may be combined with any upper limit to form a range that is not explicitly described; and any lower limit may be combined with any other lower limit to form a range that is not explicitly described, and any upper limit may be combined with any other upper limit to form a range that is not explicitly described. Further, although not explicitly specified, each point or single value between endpoints of a range is included in the range. Thus, each point or single value can be taken as a lower or upper limit to be combined with any other point or single value or with any other lower or upper limit to form a range that is not explicitly specified.

In the description herein, it should be noted that, unless otherwise stated, the recitation of numerical ranges by "above" and "below" include all numbers within that range including the endpoints. As used herein, the recitation of "more" in the phrase "one or more" includes two or more.

In the description herein, unless otherwise stated, the term "or" is inclusive. For example, the phrase "A or B" means "A, B, or both A and B." More specifically, a condition "A or B" is satisfied by any one of the following: A is true (or present) and B is false (or not present); A is false (or not present) and B is true (or present); or both A and B are true (or present).

It should be noted that, relationship terms such as first and second are used merely to distinguish one entity or operation from another entity or operation, and do not necessarily require or imply that such entities or operations follow any actual relationship or order.

The above summary of the present application is not intended to describe every disclosed embodiment or every implementation of the present application. The following description will illustrate exemplary embodiments in more detail. Throughout the application, teachings are provided by means of a number of embodiments, which can be used in various combinations. In each instance, a list is only a representative group and should not be interpreted as exhaustive.

The electrode plate is an important component of a secondary battery. The electrode plate comprises an electrode active material, and the active material allows the reversible intercalation and de-intercalation of active ions to achieve the charge and discharge of a battery. Therefore, the performance of the electrode active material directly affects the electrochemical performance of the secondary battery.

Prussian blue compounds (transition metal cyanides) have a unique open framework structure and can provide abundant active sites and three-dimensional transmission channels for the de-intercalation of a plurality of ions (e.g. $Li^+$,

and Na$^+$, K$^+$, and Mg$^{2+}$, etc. with larger size), and therefore, they have become a positive electrode active material for secondary batteries with great application potential. This undoubtedly provides an opportunity for the development of novel secondary batteries such as sodium ion batteries.

However, the Prussian blue compound has strong water absorption, resulting in its high water content. For example, Prussian blue compound, which is the positive electrode active material of a sodium ion battery, is easy to have zeolite-type water molecules with a similar number of sodium atoms in its framework structure. In addition, due to the defect of C-transition metal bond per se, the Prussian blue compound is easy to have a considerable amount of C-coordinated water in its framework structure; at the same time, there is also independent interstitial water in the channels. The Prussian blue compound contains a lot of water in its structure, which will not only affect the utilization of the capacity, but various forms of water will be released into the electrolyte solution together with sodium ions during the charge and discharge process of the battery to form free water, leading to the increase of side reactions in the battery and irreversible consumption of active ions, thus affecting the cycling performance of the battery. The free water in the battery will also affect the film formation quality of the solid electrolyte interface (SEI) film. The continuous repair of the SEI film will further increase the film formation consumption of the electrolyte solution and active ions, increase the internal resistance of the battery, and further reduce the cycling performance of the battery.

However, due to the structural characteristics of the Prussian blue compound per se, it is very difficult to remove the water contained in it. The existing water removal method may comprise treating the Prussian blue compound for a long time at high temperature (e.g. 140°C) under vacuum, which leads to difficult industrialization implementation and high requirements on equipment. Moreover, even if most water is removed during the drying process under vacuum at high temperature, the Prussian blue compound still very easily re-adsorbs water from the air after being taken out of the vacuum drying equipment and in the subsequent electrode plate and battery preparation processes. Therefore, the problem of how to overcome degradation of the electrochemical performance of batteries caused by the strong water-absorption property of Prussian blue compounds has become a critical challenge in the research and development of secondary batteries.

The inventors have carried out a lot of research and skillfully provided a new idea of water removal after the battery is assembled and molded, which significantly improves the cycling performance of secondary batteries.

On this basis, the present application provides an electrode plate comprising a current collector and an active material layer provided on at least one surface of the current collector, wherein the active material layer comprises an active material and a solid water-fixing agent, and the water-fixing agent can fix water.

The electrode plate of the present application can be a positive electrode plate and/or a negative electrode plate. In a secondary battery, any one or both of the positive electrode plate and the negative electrode plate contain the water-fixing agent, and both of the two situations can fix the water in the battery.

In some embodiments, the water-fixing agent can fix water by means of physical absorption and/or chemical bonding. Under the normal working conditions of the battery using the electrode plate, very little or no water fixed by the water-fixing agent will be redistributed to the active material phase and/or the electrolyte solution phase. Generally, under normal working conditions, the maximum temperature inside the secondary battery is 30°C - 70°C, for example, 45°C - 70°C, 55°C - 70°C, or 40°C - 60°C. In some embodiments, the water-fixing agent combines with free water to form a substance containing structural water and/or adsorbed water. As an example, the water-fixing agent can fix water in a crystal structure. In this example, the water-fixing agent can combine with free water to form a hydrate, for example, a crystal hydrate. In other embodiments, the water-fixing agent can also chemically react with free water to generate other electrochemically inert components.

For the secondary battery using the electrode plate of the present application, during its formation stage and/or the charge/discharge cycling stage (e.g. the initial cycling stage), the water combined in the positive electrode active material (e.g. positive electrode materials such as Prussian blue compounds) or the negative electrode active material, for example, adsorbed water, coordinated water, or zeolite-type water, etc., will be released to the electrolyte solution along with active ions to form free water. At the same time, the water-fixing agent in the active material layer captures and fixes free water, which can significantly reduce the content of free water in the secondary battery, significantly decrease the negative influence of water on electrochemical performance, and improve the capacity retention ratio of the secondary battery in the cycling process, thus improving the cycling performance of the secondary battery.

In some embodiments, the water-fixing agent can be present in a solid state. In a secondary battery, the water-fixing agent is hardly soluble or insoluble in the electrolyte solution. In other words, during the normal charge/discharge or storage process of the battery, the water-fixing agent can also remain bonded in the active material layer in a solid state. Therefore, it is possible to prevent the water from returning to the electrolyte solution again due to the dissolution of the water-fixing agent in the electrolyte solution. In addition, since the state of the water-fixing agent in the active material layer is stable, the plate can also maintain a good pore structure and electrolyte solution contact interface, which is beneficial to improve the cycling performance of the battery.

The use of the electrode plate provided by the present application can also improve the utilization of the capacity of the secondary battery, making the secondary battery have both high initial specific discharge capacity and initial charge/discharge efficiency.

In some embodiments, the active material layer can be formed by coating an electrode slurry containing an active material and a water-fixing agent, and drying and cold pressing same. The solvent of the electrode slurry can be a solvent known in the art. For example, the solvent can selected from N-methylpyrrolidone (NMP), deionized water, etc.

In some embodiments, after heat treatment at 80°C for 30 min, the water content $W_H$ of the water-fixing agent with water fixed can satisfy: $W_H \leq 5\% \times$ the water absorption at saturation of the water-fixing agent. For example, $W_H \leq 4\% \times$ the water absorption at saturation of the water-fixing agent, $W_H \leq 3\% \times$ the water absorption at saturation of the water-fixing agent, $W_H \leq 2\% \times$ the water absorption at saturation of the water-fixing agent, or $W_H \leq 1\% \times$ the water absorption at saturation of the water-fixing agent. When the water-fixing agent contains more water, especially when the electrode slurry takes water as the solvent, the water-fixing agent will adsorb a lot of water. Since the water-fixing agent meets the above-mentioned conditions, the water adsorbed by it can be removed during the drying process of the coating (e.g. 80°C-140°C), thus ensuring that the water-fixing agent can play a role of fixing water during the formation stage and/or the charge/discharge cycling stage of a battery.

In some embodiments, after heat treatment at 150°C for 30 min, the weight loss rate $R_{WL}$ of the electrode plate can satisfy: $R_{WL} \leq 15\%$. For example, $R_{WL}$ is 1% - 15%, 1% - 10%, 2% - 8%, 2% - 6%, 1.5% - 5%, 2% - 5%, 2.5% - 4.5%, 3% - 12%, 4% - 9%, or 3% - 7%. The electrode plate meets the above-mentioned conditions, the water-fixing agent substantially will not decompose at the temperature for drying the coating layer, and thus ensuring that the water-fixing agent can play a role of fixing water during the formation stage and/or the charge/discharge cycling stage of a battery.

In some embodiments, the water absorption at saturation $R_{SA}$ of the water-fixing agent can satisfy: $R_{SA} \geq 40\%$. For example, $R_{SA} \geq 50\%$, $\geq 60\%$, $\geq 70\%$, $\geq 80\%$, $\geq 90\%$, or $\geq 100\%$. The water-fixing agent has a large water absorption capacity, which can reduce the content of the water-fixing agent in the active material layer, and improve the energy density of the battery while achieving a good water removal effect.

In some embodiments, the water-fixing agent is powder. For example, the water-fixing agent has a volume average particle size $D_v50$ of 10 nm-100 $\mu$m. As a further example, the $D_v50$ of the water-fixing agent is 20 nm - 30 $\mu$m, 30 nm - 15 $\mu$m, 50 nm - 10 $\mu$m, 200 nm - 3 $\mu$m, 1 $\mu$m - 10 $\mu$m, or 2 $\mu$m - 8 $\mu$m, etc. As the $D_v50$ of the water-fixing agent powder is in an appropriate range, it can have a large specific surface area, which is beneficial for water removal, thus further improving the cycling performance of the battery; at the same time, the risk that the surface of the active material layer is too rough to pierce the isolation film can be avoided, so that the battery can obtain high safety performance.

In some embodiments, the water-fixing agent can include an inorganic water removal material. Optionally, the water-fixing agent includes one or more of anhydrous sodium sulfate, anhydrous calcium sulfate, anhydrous calcium chloride, anhydrous magnesium sulfate, anhydrous magnesium perchlorate, anhydrous aluminum trichloride, activated alumina and silica gel. Further optionally, the water-fixing agent includes one or more of anhydrous sodium sulfate, anhydrous calcium chloride, anhydrous magnesium sulfate and anhydrous aluminum trichloride. Still further optionally, the water-fixing agent includes one or more of anhydrous sodium sulfate and anhydrous magnesium sulfate. The use of a suitable water-fixing agent can better improve the cycling performance of a battery and can also further improve the initial specific discharge capacity and the initial charge/discharge efficiency.

In some embodiments, the mass percentage of the water-fixing agent in the active material layer can be 0.1% - 10%. Optionally, the mass percentage of the water-fixing agent in the active material layer is 0.2% - 8%, 0.5% - 5%, 1% - 6%, 2% - 5%, or 3% - 6%, etc. When the mass percentage of the water-fixing agent in the active material layer is within the above-mentioned range, it can not only effectively reduce the content of free water in a battery and improve the cycling performance of the battery, but also help the battery to obtain a high energy density.

In some embodiments, the electrode plate can be a positive electrode plate. The positive electrode plate comprises a positive electrode current collector and a positive electrode active material layer provided on at least one surface of the positive electrode current collector, wherein the positive electrode active material layer comprises a positive electrode active material and a solid water-fixing agent, and the water-fixing agent can fix water. The water-fixing agent can be any one or more of those described herein.

In some embodiments, the positive electrode current collector can be a metal foil or a composite current collector (the composite current collector can be formed by arranging a metal material on a polymer substrate). As an example, an aluminum foil can be used as the positive electrode current collector.

In some embodiments, the positive electrode active material layer can comprise a positive electrode active material, a water-fixing agent, and an optional binder and an optional conductive agent. The positive electrode active material layer can be formed by coating a positive electrode slurry, and drying and cold pressing same. The positive electrode slurry is formed by dispersing a positive electrode active material, a water-fixing agent, and an optional conductive agent and an optional binder into a solvent and uniformly stirring same. The solvent can be N-methylpyrrolidone (NMP).

In some embodiments, the mass percentage of the water-fixing agent in the positive electrode active material layer can be 0.1% - 10%, for example, 1% - 8%, 2.5% - 8%, 3% - 7%, 2% - 6%, 1% - 5%, 2% - 5%, or 3% - 5%. The water-fixing agent is added into the positive electrode active material layer such that the mass percentage of the water-fixing agent in the positive electrode active material layer is within the above-mentioned range, which can not only effectively reduce the content of free water in a battery and improve the cycling performance of the battery, but also help the battery to obtain a high energy density.

In some embodiments, the positive electrode active material may include a transition metal cyanide. As an example, the positive electrode active material includes one or more of $Na_2MnFe(CN)_4$, $Na_2FeFe(CN)_4$, $Na_2NiFe(CN)_4$, and $Na_2CuFe(CN)_4$.

In some embodiments, the mass percentage of the positive electrode active material in the positive electrode active material layer can be 70% - 95%, for example, 70% - 95%, 75% - 90%, or 80% - 90%, etc. The positive electrode active material layer has a high percentage of an active material, which can make the battery obtain a relatively high energy density.

In some embodiments, the binder in the positive electrode active material layer may include one or more of polyvinylidene fluoride (PVDF) and polytetrafluoroethylene (PTFE).

In some embodiments, the mass percentage of the binder in the positive electrode active material layer can be 3% - 10%, for example 4% - 8%, or 5% - 6%. The positive electrode active material layer contains an appropriate amount of a binder, which can improve the adhesive force between the positive electrode active material layer and the positive electrode current collector as well as the adhesive force between particles, and reduce the risks of film peeling and powder falling, such that the battery can obtain high cycling performance. At the same time, an appropriate content of a binder is also beneficial for the battery to have a relatively high energy density.

In some embodiments, the conductive agent in the positive electrode active material layer may include one or more of superconducting carbon, carbon black (e.g., acetylene black, ketjen black), carbon dots, carbon nanotubes, graphene, and carbon nanofibers.

In some embodiments, the mass percentage of the conductive agent in the positive electrode active material layer can be 5% - 10%, for example 6% - 10%. The positive electrode active material layer contains an appropriate amount of a conductive agent, which can make the positive electrode plate have a relatively high electronic conductivity, thus improving the cycling performance of the battery; at the same time, it is also beneficial for the battery to have a relatively high energy density.

In some embodiments, the electrode plate can be a negative electrode plate. The negative electrode plate comprises a negative electrode current collector and a negative electrode active material layer provided on at least one surface of the negative electrode current collector, wherein the negative electrode active material layer comprises a negative electrode active material and a solid water-fixing agent, and the water-fixing agent can fix water. The water-fixing agent can be any one or more of those described herein.

In some embodiments, the negative electrode current collector can be a metal foil or a composite current collector (the composite current collector can be formed by arranging a metal material on a polymer substrate). As an example, the negative electrode current collector can be a copper foil.

In some embodiments, in the negative electrode plate of the present application, the negative electrode active material layer can comprise a negative electrode active material, a water-fixing agent, and an optional binder, an optional conductive agent and other optional auxiliaries. The negative electrode active material layer can be formed by coating a negative electrode slurry, and drying and cold pressing same. The negative electrode slurry is formed by dispersing a negative electrode active material, a water-fixing agent, and an optional conductive agent, an optional binder and other optional auxiliaries into a solvent and uniformly stirring same. The solvent can be N-methylpyrrolidone (NMP) or deionized water.

The mass percentage of the water-fixing agent in the negative electrode active material layer can be 0.1% - 5%, for example 0.5% - 5%, 1% - 5%, 0.5% - 3%, 1% - 3%, 0.8% - 2.5%, or 1% - 2%. The water-fixing agent is added into the negative electrode active material layer such that the mass percentage of the water-fixing agent in the negative electrode active material layer is within the above-mentioned range, which can not only effectively reduce the content of free water in a battery and improve the cycling performance of the battery, but also help the battery to obtain a high energy density.

In some embodiments, the negative electrode active material includes one or more of sodium metal, soft carbon, hard carbon, synthetic graphite, natural graphite, silicon, silicon oxides, silicon nitrides, silicon carbon composites, transition metal cyanides, metals that can form alloys with sodium, polyanionic compounds, and sodium-containing transition metal oxides. Optionally, the negative electrode active material includes one or more of sodium metal, soft carbon, hard carbon, synthetic graphite, natural graphite, silicon oxides, silicon nitrides and silicon carbon composites. Optionally, the negative electrode active material includes one or more of hard carbon and silicon carbon composites. The use of a suitable negative electrode active material enables a battery to have both high cycling performance and high energy density.

In some embodiments, the mass percentage of the negative electrode active material in the negative electrode active material layer can be 85% - 97%, for example 90% - 96% or 93% - 95%, etc. The negative electrode active material layer has a high percentage of an active material, which can make the battery obtain a relatively high energy density.

In some embodiments, the binder in the negative electrode active material layer may include one or more of a butadiene styrene rubber (SBR), a water-based acrylic resin, polyvinyl alcohol (PVA), sodium alginate (SA) and carboxymethyl chitosan (CMCS).

In some embodiments, the mass percentage of the binder in the negative electrode active material layer can be 1% - 5%, for example 1% - 3%, or 1% - 2%. The negative electrode active material layer contains an appropriate amount of a binder, which can improve the adhesive force between the negative electrode active material layer and the negative electrode current collector as well as the adhesive force between particles, and reduce the risks of film peeling and powder falling, such that the battery can obtain high cycling performance. At the same time, an appropriate content of a binder is also beneficial for the battery to have a relatively high energy density.

In some embodiments, the conductive agent in the negative electrode active material layer may include one or more of superconducting carbon, carbon black (e.g., acetylene black, ketjen black), carbon dots, carbon nanotubes, graphene, and carbon nanofibers.

In some embodiments, the mass percentage of the conductive agent in the negative electrode active material layer can be 1% - 5%, for example 2% - 4%, or 2% - 3%. The negative electrode active material layer contains an appropriate amount of a conductive agent, which can make the negative electrode plate have a relatively high electronic conductivity, thus improving the cycling performance of the battery; it is also beneficial for the battery to have a relatively high energy density.

In some embodiments, the negative electrode active material layer may also comprise other optional auxiliaries to improve the performance of the negative electrode active material layer. Other optional auxiliaries are for example a thickening agent (e.g. sodium carboxymethyl cellulose CMC-Na), a PTC thermistor material, etc. As an example, the negative electrode active material layer comprises a thickening agent. The mass percentage of the thickening agent in the negative electrode active material layer can be 1% - 5%, for example 1% - 3%, or 1% - 2%.

In some embodiments, the active material layer can be provided on one surface of the current collector or both surfaces of the current collector at the same time.

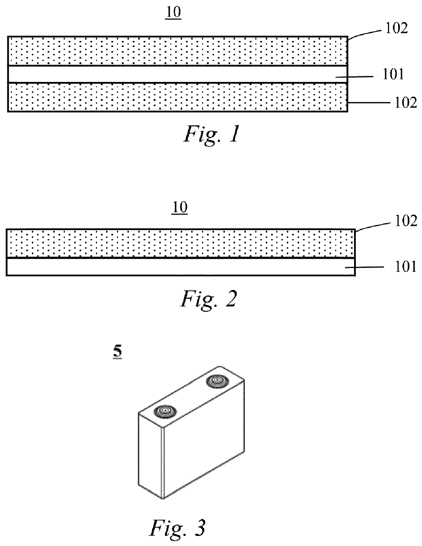

Fig. 1 shows a schematic diagram of an embodiment of the electrode plate 10 of the present application. The electrode plate 10 is composed of a current collector 101 and active material layers 102 respectively provided on two surfaces of the current collector 101.

Fig. 2 shows a schematic diagram of another embodiment of the electrode plate 10 of the present application. The electrode plate 10 is composed of a current collector 101 and an active material layer 102 provided on one surface of the current collector 101.

In the present application, the water absorption at saturation of the water-fixing agent has a meaning that is well known in the art, and can be determined by methods known in the art. An exemplary test method is as follows: the mass $m_1$ of the water-fixing agent in the dry state is weighed, during which, in order to ensure that the water-fixing agent is in the dry state, the water-fixing agent can be dried at a certain temperature (e.g. 150°C) for a certain time (e.g. 30 min); then the water-fixing agent is placed in a humid environment (for example, with a relative humidity of 50% - 90%, e.g. 80%) for enough time (e.g. 24 h - 48 h) until the water-fixing agent reaches equilibrium of water absorption, and the mass $m_2$ of the water-fixing agent is weighed; the water absorption at saturation of the water-fixing agent = $m_2 - m_1$. If the water-fixing agent combines with water to form a crystal hydrate, the water absorption at saturation can be calculated from the content of crystal water.

An exemplary test method for the water content $W_H$ of the water-fixing agent with water fixed after heat treatment at 80°C for 30 min is as follows: the above-mentioned water-fixing agent after weighing $m_2$ is heated at 80°C for 30 min, and the mass after heating $m_3$ is recorded to arrived at $W_H = m_3 - m_1$.

In the present application, the electrode plate is heated at 150°C for 30 min, and the mass before heating $M_1$ and the mass after heating $M_2$ are respectively recorded; according to $R_{WL}$ (%) = (1 - $M_2/M_3$) $\times$ 100%, the weight loss rate of the electrode plate after heat treatment at 150°C for 30 min is obtained. The heat treatment and weighing of the electrode plate can be simultaneously performed in a water meter (e.g. Mettler weighing water meter HE53).

In the present application, the water absorption at saturation $R_{WA}$ of the water-fixing agent can be calculated according to the following equation: $R_{WA}$ (%) = ($m_2 - m_1$)/$m_1$ $\times$ 100%.

If the water-fixing agent combines with water to form a hydrate, the water absorption at saturation can also be calculated by the mass of water consumed when the reaction between the water-fixing agent and water reaches equilibrium ÷ the mass of the water-fixing agent free of water X 100%. For example, the water absorption at saturation of anhydrous sodium sulfate calculated according to the reaction formula (1) is 127%. The water absorption at saturation of anhydrous sodium sulfate calculated according to the reaction formula (2) is 105%. The water absorption at saturation of anhydrous aluminum chloride calculated according to the reaction formula (3) is 81%. Similarly, the water absorption at saturation of anhydrous calcium chloride is 97%.

Anhydrous sodium sulfate:

$$Na_2SO_4 + 10H_2O(l) \leftrightharpoons Na_2SO_4 \cdot 10H_2O(s) \quad (1)$$

Anhydrous magnesium sulfate:

$$MgSO_4 + 7H_2O(l) \leftrightharpoons MgSO_4 \cdot 7H_2O(s)$$

Anhydrous aluminum chloride:

$$Al^{3+} + 6H_2O(l) \leftrightharpoons Al_2O_3 \cdot 3H_2O(s) + 6H^+$$

Where 1 represents the liquid state; s represents the solid state.

In the present application, the $D_v50$ of the water-fixing agent powder has the meaning that is well known in the art, and can be measured by methods known in the art. For example, a laser particle size analyzer (e.g. Malvern Master Size 3000) test. The test can refer to GB/T 19077.1-2016. Wherein: $D_v50$ represents the particle size corresponding to the cumulative volume distribution percentage of the water-fixing agent powder reaching 50%.

The present application further provides a secondary battery comprising a positive electrode plate and a negative electrode plate, wherein the positive electrode plate and/or the negative electrode plate is the electrode plate provided by the present application.

The secondary battery can be, but is not limited to, a lithium-ion battery, a sodium-ion battery, a potassium-ion battery, a magnesium-ion battery, a calcium-ion battery, etc. As an example, the secondary battery is a sodium-ion battery.

In the secondary battery of the present application, the electrode plate of the present application can be used as the positive electrode plate, and a negative electrode plate that does not contain a water-fixing agent can be used as the negative electrode plate. Alternatively, the electrode plate of the present application is used as the negative electrode plate, and a positive electrode plate that does not contain a water-fixing agent is used as the positive electrode plate. Alternatively, the electrode sheet of the present application can be used as both the positive electrode sheet and the negative electrode plate.

Due to the use of the electrode plate of the present application, the secondary battery can have corresponding beneficial effects. The secondary battery can have a high cycling performance, as well as a high initial specific discharge capacity and initial charge/discharge efficiency.

The secondary battery of the present application can also comprise a separator. The separator is arranged between the positive electrode plate and the negative electrode plate and plays a role of isolation. The secondary battery of the present application can use any well known separator with a porous structure for the secondary battery. For example, the separator can be selected from one or more of a glass fiber film, a non-woven film, a polyethylene film, a polypropylene film, a polyvinylidene fluoride film, and a multilayer composite film comprising one or more than two of them.

The secondary battery of the present application can also comprise an electrolyte. The electrolyte in the secondary battery plays a role of transmitting ions. In the secondary battery of the present application, the electrolyte can be a solid electrolyte membrane or a liquid electrolyte (i.e. an electrolyte solution). In some embodiments, the electrolyte is an electrolyte solution. The electrolyte solution comprises an electrolyte salt, a solvent, and an optional additive.

In some embodiments, the electrolyte salt can be selected form one or more of $NaPF_6$, $NaClO_4$, $NaBF_4$, and NaBOB (sodium bis(oxalate)borate).

In some embodiments, the solvent can be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate ( EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS) and diethyl sulfone (ESE).

In some embodiments, the additive optionally includes a negative electrode film-forming additive, further optionally a positive electrode film-forming additive, still further optionally an additive that can improve certain properties of a battery, for example, an additive that can improve the overcharge performance of the battery, an additive that can improve the high-temperature performance of the battery, an additive that can improve the low-temperature performance of the battery, etc.

In the secondary battery of the present application, an electrode assembly can be formed by a positive electrode plate, a negative electrode plate and a separator via a stacking process or a winding process, wherein the separator is interposed between the positive electrode plate and the negative electrode plate and plays a role of isolation.

The secondary battery of the present application can comprise an outer package. The outer package is used to package the electrode assembly and the electrolyte solution.

In some embodiments, the outer package can be a hard housing, for example, a hard plastic housing, an aluminum housing, a steel housing, etc. The outer package can also be a soft package, for example, a bag-type soft package. The material of the soft package may be plastic, for example, one or more of polypropylene (PP), polybutylene terephthalate (PBT), and polybutylene succinate (PBS), etc.

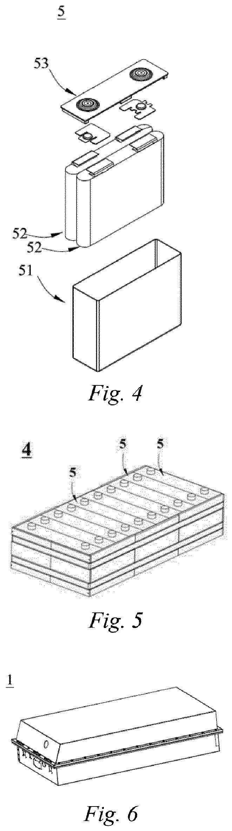

The shape of the secondary battery is not particularly limited in the present application, and it may be cylindrical, square or any other shape. Fig. 3 is an exemplary secondary battery 5 with a square structure. As shown in Fig. 4, the outer package can include a housing 51 and a cover plate 53. Wherein the housing 51 can include a bottom plate and a side plate connected to the bottom plate, and the bottom plate and the side plate are enclosed to form an accommodating cavity. The housing 51 has an opening communicating with the accommodating cavity, and the cover plate 53 can cover the opening to close the accommodating cavity. The electrode assembly 52 is packaged in the accommodating cavity. The electrolyte solution is infiltrated in the electrode assembly 52. The number of the electrode assembly 52 contained in the secondary battery 5 can be one or server, which can be adjusted according to requirements.

In some embodiments, the secondary battery can be assembled into a battery module, and the number of the secondary battery contained in the battery module can be multiple, and the specific number can be adjusted according to the application and capacity of the battery module.

Fig. 5 is an exemplary battery module 4. As shown in Fig. 5, in the battery module 4, a plurality of secondary batteries 5 can be arranged in sequence along the longitudinal direction of the battery module 4. Of course, they can also be arranged in any other manner. The plurality of secondary batteries 5 can further be fixed with fasteners.

Optionally, the battery module 4 may further include a housing having an accommodating space in which a plurality of secondary batteries 5 are accommodated.

In some embodiments, the battery module can also be assembled into a battery pack, and the number of the battery modules contained in the battery pack can be adjusted according to the application and capacity of the battery pack.

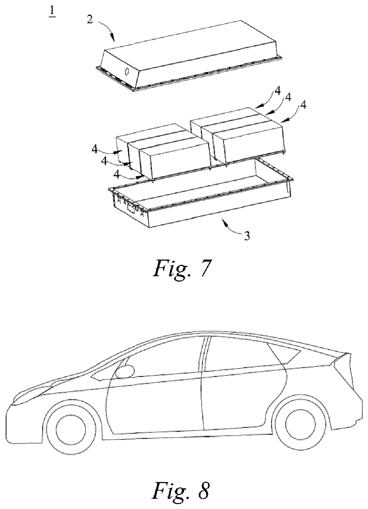

Fig. 6 and Fig. 7 show an exemplary battery pack 1. As shown in Fig. 6 and Fig. 7, the battery pack 1 can include a battery box and a plurality of battery modules 4 arranged in the battery box. The battery box includes an upper box body 2 and a lower box body 3, and the upper box body 2 can cover the lower box body 3 and form a closed space for accommodating the battery module 4. The plurality of battery modules 4 can be arranged in the battery box in any manner.

The present application also provides a method for preparing a secondary battery. The preparation method includes preparing the electrode plate of the secondary battery by the following steps: providing a slurry comprising an active material and a water-fixing agent; coating the slurry on at least one surface of the current collector, and drying and cold pressing same to obtain the electrode plate.

In some embodiments, the electrode plate may be a positive electrode plate. The slurry may be the positive electrode slurry described above.

In some embodiments, the electrode plate may be a negative electrode plate. The slurry may be the negative electrode slurry described above.

The preferred technical features or technical solutions of the electrode plate of the present application are also applicable to the preparation method of the present application and produce corresponding beneficial effects.

The preparation method of the present application can also include other well known steps for preparing a secondary battery, and details are not described herein again.

The present application further provides a device which comprises at least one of the secondary battery, battery module or battery pack according to the present application. The secondary battery, battery module or battery pack may be used as a power source of the device or as an energy storage unit of the device. The device may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like.

The device can incorporate the secondary battery, battery module or battery pack according to its usage requirements.

Fig. 8 is an exemplary device. The apparatus is a pure electric vehicle, a hybrid electric vehicle, or a plug-in hybrid electric vehicle. In order to meet the requirements of the device for a high power and a high energy density of a secondary battery, a battery pack or a battery module can be used.

As another example, the device may be a mobile phone, a tablet, a laptop computer, etc. The device is generally required to be thin and light, and may use a secondary battery as a power source.

**Examples**

The disclosure of the present application will be described more specifically in the following examples, and these examples are merely illustrative, since it would be apparent that a person skilled in the art would make various modifications and variations within the scope of the disclosure of the present application. Unless otherwise stated, all parts, percentages and ratios reported in the following examples are by weight, and all agents used in the examples are commercially available or synthesized according to conventional methods, and can be directly used without further treatment, and all instruments used in the examples are commercially available.

**Performance test of secondary battery**

At 25°C, the sodium ion batteries prepared in the examples and comparative examples are charged and discharged for the first time, i.e., the batteries are charged at a constant charging current rate of 0.1C (that is, the current value at which the theoretical capacity is completely discharged within 10 h) to the upper limit cut-off voltage of 4 V, then charged at a constant voltage to a current $\leq 0.05C$, and the charge capacity of the first cycle is recorded; after standing for 5 min, the batteries are discharged at a constant discharging current rate of 0.1C to the lower limit cut-off voltage of 2 V, and the discharge capacity of the first cycle is recorded. The batteries are subjected to 15 charge/discharge cycles as described above, and the discharge capacity of the 15th cycle is recorded. The cycling capacity retention rate of the secondary battery (%) = (the discharge capacity of the 15th cycle/the discharge capacity of the first cycle) $\times$ 100%.

The initial specific discharge capacity of the secondary battery (mAh/g) = the discharge capacity of the first cycle (mAh)/the mass of the secondary battery (g).

The initial charge/discharge efficiency of the secondary battery (%) = the discharge capacity of the first cycle/the charge capacity of the first cycle

**Preparation of secondary battery and test results**

(1) Use of the electrode plate of the present application as positive electrode plate

**Example 1**

Preparation of positive electrode plate

A positive electrode active material of $Na_2MnFe(CN)_4$, a water-fixing agent of anhydrous sodium sulfate, a conductive agent of carbon nanotube (CNT) and a binder of polyvinylidene fluoride (PVDF) are mixed at a weight ratio of 80 : 5 : 10 : 5, and thoroughly stirred and mixed in a solvent of NMP to form a uniform positive electrode slurry. The positive electrode slurry is coated onto both sides of a positive electrode current collector of aluminum foil, followed by drying and cold pressing to obtain a positive electrode plate.

Preparation of negative electrode plate

A negative electrode active material of hard carbon, a conductive agent of acetylene black, a binder of butadiene styrene rubber (SBR) and a thickening agent of sodium carboxymethyl cellulose (CMC-Na) are mixed in deionized water as a solvent at a weight ratio of 96 : 2 : 1 : 1, and thoroughly stirred and mixed to form a uniform negative electrode slurry. The negative electrode slurry is coated onto both sides of a negative electrode current collector of copper foil, followed by drying and cold pressing to obtain a negative electrode plate.

Preparation of electrolyte solution

EC and PC are uniformly mixed at a volume ratio of 1 : 1 to obtain a solvent; an electrolyte of $NaPF_6$ is then dissolved in the solvent, and uniformly mixed to obtain an electrolyte solution, wherein the concentration of $NaPF_6$ is 1 mol/L.

Preparation of secondary battery

The positive electrode plate, a glass fiber porous separator, and the negative electrode plate are laminated in sequence and then wound to obtain an electrode assembly; the electrode assembly is put into a hard outer package of aluminum, which is filled with the electrolyte solution and packaged to obtain a secondary battery.

**Examples 2-10 and Comparative example 1**

The preparation of the secondary batteries is similar to that of example 1, except that relevant preparation parameters for the positive electrode plates have been adjusted, see table 1 for details.

**Comparative example 2**

The preparation of the secondary battery is similar to that of example 1, except that the water-fixing agent in the positive electrode active material layer is replaced with hexamethyldisilazane, wherein in order to prevent the volatilization of hexamethyldisilazane, the temperature for drying the electrode plate is no more than 100°C; see table 1 for details.

Table 1: Preparation parameters for positive electrode plates and cycling performance test results of secondary batteries using same

| No. | Positive electrode active material layer | | | | | Weight loss rate of positive electrode plate after heat treatment at 150°C for 30 min [%] | Cycling capacity retention rate of secondary battery [%] |
| | Mass percentage of active material [%] | Mass percentage of conductive agent [%] | Mass percentage of binder [%] | Type of water-fixing agent | Mass percentage of water-fixing agent [%] | | |
|---|---|---|---|---|---|---|---|
| Example 1 | 80 | 10 | 5 | Anhydrous sodium sulfate | 5 | 3 | 95 |
| Example 2 | 75 | 10 | 5 | Anhydrous sodium sulfate | 10 | 2 | 92 |
| Example 3 | 77.5 | 10 | 5 | Anhydrous sodium sulfate | 7.5 | 2.5 | 95 |
| Example 4 | 82.5 | 10 | 5 | Anhydrous sodium sulfate | 2.5 | 4.5 | 93 |
| Example 5 | 84 | 10 | 5 | Anhydrous sodium sulfate | 1 | 5.8 | 88 |
| Example 6 | 84.9 | 10 | 5 | Anhydrous sodium sulfate | 0.1 | 6 | 72 |
| Example 7 | 90 | 6 | 3 | Anhydrous magnesium sulfate | 1 | 3.4 | 92 |
| Example 8 | 70 | 10 | 10 | Anhydrous calcium chloride | 10 | 2 | 93 |
| Example 9 | 85 | 6 | 6 | Anhydrous aluminum trichloride | 3 | 5.9 | 78 |
| Example 10 | 80 | 10 | 5 | Activated alumina | 5 | 1.5 | 92 |
| Comparative example 1 | 80 | 10 | 10 | / | 0 | / | 66 |
| Comparative example 2 | 80 | 10 | 5 | Hexamethyldisilazane | 5 | 8.3 | 56 |

It can be seen from the results in table 1 that by using the electrode plate of the present application as positive electrode plate, the cycling capacity retention rate of the secondary battery comprising the positive electrode plate can be significantly improved, and therefore the secondary battery has significantly improved cycling performance.

Comparative example 1 has poor cycling performance because it does not contain the water-fixing agent.

In comparative example 2, the positive electrode active material layer is added with hexamethyldisilazane; since silazane-like substances remove water by means of hydrolysis of water on the Si-N bond, which hydrolysis generates free ammonium radicals, the cycling performance of this battery is greatly affected.

Table 2: Test results for initial specific discharge capacity and initial charge/discharge efficiency of secondary batteries

| No. | Initial specific discharge capacity [mAh/g] | Initial charge/discharge efficiency [%] |
|---|---|---|
| Example 1 | 32.5 | 87.8 |
| Example 2 | 30.9 | 88.1 |
| Example 3 | 31.7 | 87.9 |
| Example 4 | 32.7 | 87.4 |
| Example 5 | 32.9 | 87.3 |
| Example 6 | 32.9 | 87.1 |
| Example 7 | 32.1 | 87.7 |
| Example 8 | 32.5 | 88.1 |
| Example 9 | 32.1 | 87.1 |
| Example 10 | 32.9 | 87.2 |
| Comparative example 1 | 31.9 | 87.0 |
| Comparative example 2 | 28.8 | 84.6 |

It can be seen from the results in table 2 that by using the electrode plate of the present application as positive electrode plate, the secondary battery comprising the positive electrode plate have a relatively high initial specific discharge capacity and initial charge/discharge efficiency.

(2) Use of electrode plate of the present application as negative electrode plate

**Example 11**

The preparation method for the secondary battery is similar to that in part (1), with the differences as follows:

Preparation of positive electrode plate

A positive electrode active material $Na_2MnFe(CN)_4$, a conductive agent carbon nanotube (CNT) and a binder polyvinylidene fluoride (PVDF) are mixed at a weight ratio of 80 : 10 : 10, and fully stirred and mixed in a solvent NMP to form an uniform positive electrode slurry. The positive electrode slurry is coated onto both sides of a positive electrode current collector of aluminum foil, followed by drying and cold pressing to obtain a positive electrode plate.

Preparation of negative electrode plate

A negative electrode active material hard carbon, a water-fixing agent anhydrous sodium sulfate, a conductive agent acetylene black, a binder butadiene styrene rubber (SBR) and a thickening agent sodium carboxymethyl cellulose (CMC-Na) are mixed in a deionized water solvent at a weight ratio of 95 : 1 : 2 : 1 : 1, and fully stirred and mixed to form an uniform negative electrode slurry. The negative electrode slurry is coated onto both sides of a negative electrode current collector of copper foil, followed by drying and cold pressing to obtain a negative electrode plate.

**Examples 12 - 19 and Comparative example 3**

The preparation of the secondary battery is similar to that of example 1, except for adjusting relevant preparation parameters for the negative electrode plate, see table 3 for details.

**Comparative example 4**

The preparation of the secondary battery is similar to that of example 1, except for replacing the water-fixing agent in the negative electrode active material layer with hexamethyldisilazane, see table 3 for details.

Table 3: Preparation parameters for negative electrode plate and test results of cycling performance of secondary battery using same

| No. | Negative electrode active material layer | | | | | | | Weight loss rate of negative electrode plate after heat treatment at 150°C for 30 min [%] | Cycling capacity retention rate of secondary battery [%] |
|---|---|---|---|---|---|---|---|---|---|
| | Type of active material | Mass percentage of active material [%] | Mass percentage of conductive agent [%] | Mass percentage of binder [%] | Mass percentage of thickening agent [%] | Type of water-fixing agent | Mass percentage of water-fixing agent [%] | | |
| Example 11 | Hard carbon | 95 | 2 | 1 | 1 | Anhydrous sodium sulfate | 1 | 6 | 87 |
| Example 12 | Hard carbon | 91 | 2 | 1 | 1 | Anhydrous sodium sulfate | 5 | 4 | 82 |
| Example 13 | Hard carbon | 93 | 2 | 1 | 1 | Anhydrous sodium sulfate | 3 | 2.5 | 84 |
| Example 14 | Hard carbon | 94 | 2 | 1 | 1 | Anhydrous sodium sulfate | 2 | 4.8 | 85 |
| Example 15 | Hard carbon | 952 | 2 | 1 | 1 | Anhydrous sodium sulfate | 0.8 | 6.2 | 86 |
| Example 16 | Hard carbon | 95.5 | 2 | 1 | 1 | Anhydrous sodium sulfate | 0.5 | 7.5 | 84 |
| Example 17 | Sodium metal | 95 | 0 | 0 | 0 | Anhydrous calcium chloride | 5 | 3.4 | 75 |
| Example 18 | Natural graphite | 90 | 4 | 2 | 2 | Anhydrous magnesium sulfate | 2 | 4.7 | 77 |
| Example 19 | Silicon carbon composite | 95 | 2 | 1 | 1 | Anhydrous aluminum trichloride | 1 | 5.8 | 82 |
| Example 20 | Hard carbon | 95 | 2 | 1 | 1 | Activated alumina | 1 | 4.3 | 85 |
| Comparative example 3 | Hard carbon | 96 | 2 | 1 | 1 | / | 0 | / | 66 |

| No. | Negative electrode active material layer | | | | | | | Weight loss rate of negative electrode plate after heat treatment at 150°C for 30 min [%] | Cycling capacity retention rate of secondary battery [%] |
|---|---|---|---|---|---|---|---|---|---|
| | Type of active material | Mass percentage of active material [%] | Mass percentage of conductive agent [%] | Mass percentage of binder [%] | Mass percentage of thickening agent [%] | Type of water-fixing agent | Mass percentage of water-fixing agent [%] | | |
| Comparative example 4 | Hard carbon | 95 | 2 | 1 | 1 | Hexamethyldis ilazane | 1 | 102 | 78 |

EP 4 148 818 A1

In table 3, the silicon carbon composite contains 70 wt% of hard carbon and 30 wt% of SiO.

It can be seen from the results in table 3 that by using the electrode plate of the present application as the negative electrode plate, the cycling capacity retention rate of the secondary battery comprising it can be significantly improved, and therefore the secondary battery has significantly improved cycling performance.

Comparative example 3 has poor cycling performance because it does not contain the water-fixing agent.

In comparative example 4, the negative electrode active material layer is added with hexamethyldisilazane, and the cycling performance of the battery is obviously deteriorated.

Table 4: Test results for initial specific discharge capacity and initial charge/discharge efficiency of secondary batteries

| No. | Initial specific discharge capacity [mAh/g] | Initial charge/discharge efficiency [%] |
|---|---|---|
| Example 11 | 32.7 | 90.5 |
| Example 12 | 32.6 | 90 |
| Example 13 | 33.2 | 92 |
| Example 14 | 33.0 | 91 |
| Example 15 | 32.6 | 90 |
| Example 16 | 32.1 | 89.5 |
| Comparative example 3 | 31.9 | 87 |

It can be seen from the results in table 4 that by using the electrode plate of the present application, the negative electrode plate can also improve the initial specific discharge capacity and initial charge/discharge efficiency of the secondary battery comprising it.

Described above are merely specific embodiments of the present application, but the protection scope of the present application is not limited to thereto. Any modification, replacement, or other equivalent readily conceived by a skilled person in the art according to the disclosure of the present application shall fall within the protection scope of the present application. Therefore, the protection scope of the present application shall be subject to the protection scope of the claims.

**Claims**

1. An electrode plate, comprising a current collector and an active material layer provided on at least one surface of the current collector,
   wherein the active material layer comprises an active material and a solid water-fixing agent capable of fixing water.

2. The electrode plate according to claim 1, wherein the water-fixing agent fixes water by means of physical absorption and/or chemical bonding.

3. The electrode plate according to claim 1 or 2, wherein the water-fixing agent fixes water in a crystal structure.

4. The electrode plate according to any one of claims 1-3, wherein after heat treatment at 80°C for 30 min, the water-fixing agent with water fixed has a water content $W_H \leq 5\% \times$ the water absorption at saturation of the water-fixing agent; optionally, $W_H \leq 1\% \times$ the water absorption at saturation of the water-fixing agent.

5. The electrode plate according to any one of claims 1-4, wherein after heat treatment at 150°C for 30 min, the electrode plate has a weight loss rate $R_{WL} \leq 15\%$; optionally, $R_{WL}$ is 1% - 10%; further optionally, $R_{WL}$ is 2% - 6%.

6. The electrode plate according to any one of claims 1-5, wherein the water-fixing agent has a water absorption at saturation $R_{SA} \geq 40\%$; optionally, $R_{SA} \geq 80\%$; further optionally, $R_{SA} \geq 100\%$.

7. The electrode plate according to any one of claims 1-6, wherein the water-fixing agent is a powder with a volume-average particle size $D_v50$ of 10 nm - 100 $\mu$m; optionally, the water-fixing agent has a $D_v50$ of 50 nm - 10 $\mu$m.

8. The electrode plate according to any one of claims 1-7, wherein the water-fixing agent includes an inorganic water removal material, optionally including one or more of anhydrous sodium sulfate, anhydrous calcium sulfate, anhydrous calcium chloride, anhydrous magnesium sulfate, anhydrous magnesium perchlorate, anhydrous aluminum trichloride, activated alumina and silica gel, further optionally including one or more of anhydrous sodium sulfate and anhydrous magnesium sulfate.

9. The electrode plate according to any one of claims 1-8, wherein the mass percentage of the water-fixing agent in the active material layer is 0.1% - 10%, optionally 0.5% - 5%.

10. The electrode plate according to any one of claims 1-9, wherein the electrode plate is a positive electrode plate, which comprises a positive electrode current collector and a positive electrode active material layer provided on at least one surface of the positive electrode current collector, the positive electrode active material layer comprising a positive electrode active material and the water-fixing agent.

11. The electrode plate according to claim 10, wherein the mass percentage of the water-fixing agent in the positive electrode active material layer is 1% - 5%.

12. The electrode plate according to claim 10 or 11, wherein the positive electrode active material includes a transition metal cyanide, optionally including one or more of $Na_2MnFe(CN)_4$, $Na_2FeFe(CN)_4$, $Na_2NiFe(CN)_4$, and $Na_2CuFe(CN)_4$.

13. The electrode plate according to any one of claims 1-9, wherein the electrode plate is a negative electrode plate, which comprises a negative electrode current collector and a negative electrode active material layer provided on at least one surface of the negative electrode current collector, the negative electrode active material layer comprising a negative electrode active material and the water-fixing agent.

14. The electrode plate according to claim 13, wherein the mass percentage of the water-fixing agent in the negative electrode active material layer is 0.5% - 3%.

15. The electrode plate according to claim 13 or 14, wherein the negative electrode active material includes one or more of sodium metal, soft carbon, hard carbon, synthetic graphite, natural graphite, silicon, silicon oxides, silicon nitrides, silicon carbon composites, transition metal cyanides, a metal that can form an alloy with sodium, polyanionic compounds, and sodium-containing transition metal oxides.

16. A secondary battery comprising a positive electrode plate and a negative electrode plate, wherein the positive electrode plate and/or the negative electrode plate is an electrode plate according to any one of claims 1-15.

17. A method for preparing a secondary battery, comprising preparing an electrode plate of the secondary battery by the steps of:

    providing a slurry comprising an active material and a water-fixing agent;
    coating the slurry on at least one surface of a current collector, followed by drying and cold pressing an to obtain electrode plate,
    wherein the water-fixing agent in the electrode plate is in a solid state and the water-fixing agent can fix water.

18. A device comprising a secondary battery according to claim 16 and/or a secondary battery prepared by the method according to claim 17.

10

102

101

102

Fig. 1

10

102

101

Fig. 2

5

Fig. 3

5

53

52
52

51

Fig. 4

4          5     5
5

Fig. 5

1

Fig. 6

*Fig. 7*

*Fig. 8*

## INTERNATIONAL SEARCH REPORT

| International application No. |
| --- |
| **PCT/CN2021/128652** |

### A. CLASSIFICATION OF SUBJECT MATTER

H01M 4/13(2010.01)i; H01M 10/0525(2010.01)i; H01M 10/42(2006.01)i; H01M 4/139(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 电极, 正极, 负极, 阴极, 阳极, 固水, 吸水, 吸湿, 去水, 去湿, 除水, 除湿, electrode, positive, negative, cathode, anode, fix+, absorb+, remov+, absorpt+, H2O, water

### C. DOCUMENTS CONSIDERED TO BE RELEVANT

| Category* | Citation of document, with indication, where appropriate, of the relevant passages | Relevant to claim No. |
| --- | --- | --- |
| PX | CN 112216814 A (JIANGSU CONTEMPORARY AMPEREX TECHNOLOGY LIMITED) 12 January 2021 (2021-01-12) description paragraphs [0005]-[0142] | 1-18 |
| X | CN 106848379 A (LG CHEMICAL LTD.) 13 June 2017 (2017-06-13) description paragraphs [0009]-[0088] | 1-18 |
| X | CN 1571198 A (HONGFUJIN PRECISION INDUSTRY (SHENZHEN) CO., LTD. et al.) 26 January 2005 (2005-01-26) description, page 1 line 21 to page 3, line 1 from the bottom | 1-18 |
| X | CN 2694501 Y (HONGFUJIN PRECISION INDUSTRY (SHENZHEN) CO., LTD. et al.) 20 April 2005 (2005-04-20) description, page 1 line 21 to page 3, line 1 from the bottom | 1-18 |
| A | CN 109728252 A (NINGDE CONTEMPORARY AMPEREX TECHNOLOGY CO., LTD.) 07 May 2019 (2019-05-07) entire document | 1-18 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 December 2021** | **20 December 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/128652**

| Patent document cited in search report | | | Publication date (day/month/year) | Patent family member(s) | | | Publication date (day/month/year) |
|---|---|---|---|---|---|---|---|
| CN | 112216814 | A | 12 January 2021 | CN | 112216814 | B | 27 April 2021 |
| CN | 106848379 | A | 13 June 2017 | KR | 20170055419 | A | 19 May 2017 |
| | | | | KR | 102088858 | B1 | 13 March 2020 |
| | | | | CN | 106848379 | B | 26 July 2019 |
| | | | | US | 2017133685 | A1 | 11 May 2017 |
| | | | | US | 10490821 | B2 | 26 November 2019 |
| CN | 1571198 | A | 26 January 2005 | None | | | |
| CN | 2694501 | Y | 20 April 2005 | None | | | |
| CN | 109728252 | A | 07 May 2019 | EP | 3477745 | A1 | 01 May 2019 |
| | | | | US | 2019131625 | A1 | 02 May 2019 |
| | | | | US | 10818924 | B2 | 27 October 2020 |
| | | | | CN | 109728252 | B | 13 October 2020 |

Form PCT/ISA/210 (patent family annex) (January 2015)

**EP 4 148 818 A1**

**REFERENCES CITED IN THE DESCRIPTION**

**Patent documents cited in the description**

- CN 202011433363
- GB 1907712016 T